# EUROPÄISCHE PATENTSCHRIFT

(11) **EP 3 409 956 B1**
(45) Veröffentlichungstag und Bekanntmachung des Hinweises auf die Patenterteilung: **25.11.2020**
(21) Anmeldenummer: 18173744.6
(22) Anmeldetag: 23.05.2018
(51) Int. Cl.: F16B 5/02, F16F 1/02, F16F 15/073

(54) **MONTAGEEINRICHTUNG**
MOUNTING DEVICE
DISPOSITIF DE MONTAGE

(30) Priorität: 29.05.2017 DE 102017111669
(43) Veröffentlichungstag der Anmeldung: 05.12.2018
(73) Patentinhaber: Profil Verbindungstechnik GmbH & Co. KG, 61381 Friedrichsdorf (DE)
(72) Erfinder: Lembach, Andreas, 64295 Darmstadt (DE)
(74) Vertreter: Manitz Finsterwald Patent- und Rechtsanwaltspartnerschaft mbB

(56) Entgegenhaltungen:
- EP-A1- 0 692 644
- GB-A- 401 718

## Beschreibung

Die vorliegende Erfindung betrifft eine Montageeinrichtung, die eine einstellbare und feststellbare winkelmäßige Anpassung eines Gegenstandes an einen Träger zulässt.

Solche Montageeinrichtungen sind bekannt, zum Beispiel zur Anbringung eines Navigationsgeräts an die Windschutzscheibe eines Fahrzeugs, damit der Fahrer den Bildschirm des Geräts in einer für ihn günstigen Betrachtungsposition anordnen kann. Häufig wird dafür ein Träger für das Navigationsgerät mittels eines Saugknopfes an die Innenseite der Windschutzscheibe angebracht und das Navigationsgerät über ein sich zwischen dem Träger und einer Halterung am Navigationsgerät befindliches steifes Universalgelenk winkelmäßig eingestellt und durch die Reibung im Universalgelenk in der eingestellten Position gehalten.

Eine solche Anbringung hat sich durchaus bewährt, ist aber in manchen Situationen nicht ohne weiteres machbar, zum Beispiel wenn eine schwere Lampe an einer Decke zu befestigen ist oder wenn mehrere Montagepunkte verwendet werden müssen, zum Beispiel bei dem Einbau eines Projektors für ein Head-Up-Display in einem Fahrzeug. Wenn zum Beispiel ein Projektor im Armaturenbrettbereich beispielsweise in einer Vertiefung an drei oder vier Montagepunkten mittels vom Armaturenbrett abstehenden Gewindestiften anzubringen ist, muss beachtet werden, dass die genaue Ausrichtung der in der automatisierten Fertigung montierten Gewindestifte jeweilige störende winkelmäßige und koordinatenmäßige Abweichungen von der Sollposition aufweisen kann. Diese Abweichungen können aufgrund von Verformungen des Trägers - eine metallische Unterkonstruktion des Armaturenbrettes - und Fertigungstoleranzen bei der Anbringung der Gewindestifte oder anderweitiger bolzenähnlicher oder Bolzen aufnehmender Befestigungselemente entstehen. Ferner muss die Einbauposition des Projektors, insbesondere dessen Ausrichtung, genau eingestellt werden, damit die Datenanzeige an der richtigen Position im Sichtfeld des Fahrers an der Windschutzscheibe vorliegt.

Darüber hinaus soll eine automatische Positionierung und Feststellung des Projektors ermöglicht werden, was am besten nur von oben erfolgen soll.

Die GB401718A zeigt eine Montageeinrichtung gemäß der eingangsgenannten Art. Die EP0692644A1 ist ein Dokument zum technologischen Hintergrund der vorliegenden Anmeldung.

Aufgabe der vorliegenden Erfindung ist es, eine geeignete Montageeinrichtung und eine damit, aber auch anderweitig, verwendbare Klemmeinrichtung vorzusehen, wobei die Montageeinrichtung vorzugsweise während des Einbaus relativ flexibel und daher leicht zu handhaben ist, aber im geklemmten Zustand eine im Vergleich zum flexiblen Zustand relativ hohe Steifigkeit aufweist. Ferner soll bei mehreren Montagepunkten eine zumindest im Wesentlichen gleichmäßige Lastenteilung und eine einfache Kompensation für Ausrichtungsabweichungen der Anbringungselemente erreicht werden. Darüber hinaus soll, wenigstens bei einigen Ausführungsformen, eine automatische Montage aus einer Richtung gewährleistet werden.

Um diese Aufgaben zu lösen wird erfindungsgemäß eine Montageeinrichtung vorgesehen, die sich dadurch auszeichnet, dass mindestens ein geteiltes Montageelement vorgesehen ist, dessen Teile jeweils in einem Bereich einen Abschnitt aufweisen, der eine Befestigung an dem Gegenstand oder an einer am Gegenstand angebrachten Halterung ermöglicht und die an ihren dem jeweiligen Abschnitt abgewandten, einander zugewandten und gegeneinander verschiebbaren Enden gemeinsam einen Klemmbereich bilden, der eine Befestigung an dem Träger ermöglicht.

Durch die Unterteilung des Montageelements in mehrere Teile mit einander zugewandten und gegeneinander verschiebbaren Enden, die gemeinsam einen Klemmbereich bilden, der eine Befestigung an dem Träger ermöglicht, kann das Montageelement leicht S-förmig verformt werden, wodurch der Klemmbereich eine Winkelposition gegenüber einer geraden Linie (oder Ebene wenn es mehr als zwei Teile gibt) zwischen den genannten Abschnitten einnimmt, an denen die Teile am Gegenstand oder an einer Halterung des Gegenstandes befestigt sind. Ferner lässt die gegenseitige Verschiebbarkeit der einander zugewandten Enden einen Längenausgleich für die angenommene S-Form zu, ohne das Montageelement zu steif erscheinen zu lassen. Wenn aber das Montageelement im Klemmbereich geklemmt wird, was bei der Klemmung an dem Träger erfolgt, so wird die relative Verschiebbarkeit der einander zugewandten Enden der Teile aufgehoben, das Montageelement behält die aufgeprägte S-Form und wird aufgrund der nun festgelegten Länge relativ steif bzw. steifer. Darüber hinaus kann der Klemmbereich vor der Klemmung in einer Querebene des Montageelements relativ leicht gekippt werden, wobei auch diese gekippte Position beibehalten wird, wenn das mehrteilige Montageelement geklemmt wird. Das Montageelement wird auch in dieser gekippten Position festgehalten und erheblich größere Kräfte sind erforderlich, um das Montageelement aus der "eingefrorenen" Position herauszubewegen als vor der Klemmung. Wenn das mehrteilige Montageelement zweiteilig ist, kann man es als eine Art zweiteilige Blattfeder betrachten, die leicht verformbar ist, aber beim Klemmen an den bisher gegeneinander verschiebbaren Enden deutlich steifer wird, wodurch die verformte Position einen Winkelausgleich für Fehlorientierungen der Befestigungselemente schafft, auch dann, wenn mehrere Montagepunkte vorhanden sind. Die erfindungsgemäße Montageeinrichtung lässt somit eine variable Orientierung eines Gegenstandes im Raum zu, wenigstens innerhalb von beschränkten Grenzen.

Es ist erfindungsgemäß auch möglich, eine Montageeinrichtung der eingangs genannten Art vorzusehen, die mindestens ein mehrlagiges Montageelement umfasst, dessen Teile jeweils in einem Bereich einen Abschnitt aufweisen, der eine Befestigung an dem Gegenstand oder an einer am Gegenstand angebrachten Halterung ermöglicht, und die an ihrem dem jeweiligen Abschnitt abgewandten, freien Ende gemeinsam einen Klemmbereich bilden, der eine Befestigung an dem Träger ermöglicht. Es liegt sozusagen ein einarmiges aber mehrlagiges Montageelement, dessen Teile insbesondere separat ausgebildet sind. Die Teile bilden einen Stapel, der in dem Klemmbereich zur Fixierung in der gewünschten Lage geklemmt wird. Mit anderen Worten sind die freien Enden der Teile vor ihrer Klemmung zumindest geringfügig gegeneinander verschiebbar. Bevorzugt weisen die freien Enden jeweils eine Aussparung auf, der einen Abschnitt eines Befestigungselements zumindest teilweise mit einem gewissen Spiel aufnimmt.

Es ist bevorzugt wenn das Montageelement zweigeteilt ist, d.h. zweiarmig ausgebildet ist. Dies ist vollkommen ausreichend und gar bevorzugt, wenn mehrere Montageeinrichtungen gleichzeitig zur Anwendung gelangen, weil jede Montageeinrichtung platzsparend untergebracht werden kann.

Eine mehrteilige Ausbildung, bei der das Montageelement drei- oder viergeteilt ist, d.h. drei- oder vierarmig ausgebildet ist, kann aber nützlich sein, zum Beispiel dann wenn ein Gegenstand mit nur einer Montageeinrichtung in seiner Orientierung festgelegt werden soll.

Vorzugsweise werden mehrere geteilte, gleichartig ausgebildete Montageelemente vorgesehen, die übereinander ausgerichtet gelegt sind und ein Montagepaket bilden. Durch die mehrlagige Ausbildung bleibt das Montagepaket bei der Festlegung der Orientierung relativ flexibel, wird aber umso steifer, je höher der Anzahl der Montageelemente ist. Der Grund hierfür ist, dass sich die Steifigkeit des Montagepakets im geklemmten Zustand mit der vierfachen Potenz der Dicke des Montagepakets steigt.

Es ist insbesondere günstig, wenn die Teile des oder jedes Montageelements gleich ausgebildet sind. Hierdurch muss nur eine Form jedes Teils hergestellt werden.

Die Teile des oder jedes Montageelements werden vorzugsweise als Blechstanzteile oder als Kunststoffteil ggf. mit Faserverstärkung ausgebildet, dies sind kostengünstige Herstellungsmöglichkeiten für eine Massenfertigung.

Die Abschnitte des oder jedes Montageelements sind vorzugsweise durch Ausschnitte gebildet, die beispielsweise mit Befestigungslöchern ausgebildet sind. Hierdurch ist nicht nur eine kostengünstige Herstellung im Stanzverfahren oder Spritzgussverfahren möglich, sondern auch eine einfache positionsgenaue Befestigung am Gegenstand oder an einer am Gegenstand angebrachten Halterung mittels Schraubbolzen oder Nieten. Dies ist allerdings nicht zwingend erforderlich, die genannten Abschnitte könnten einfach am Gegenstand mittels einer Klemmeinrichtung geklemmt werden oder in formangepasste Aufnahmen am Gegenstand einfach eingesteckt werden.

Besonders günstig ist es, wenn die an ihren dem jeweiligen Abschnitt abgewandten, einander zugewandten und gegeneinander verschiebbaren Enden des oder jedes Montageelements, die gemeinsam den Klemmbereich bilden, jeweilige Ausschnitte aufweisen, die gemeinsam eine Öffnung zur Aufnahme eines Befestigungselements bilden. Dies ermöglicht eine einfache Klemmung durch Befestigungselemente, die sich durch die Öffnung erstrecken.

Eine Montageeinrichtung ist bevorzugt bei der jedes der Teile eines Montageelements im Bereich des Ausschnitts eine Zunge aufweist, die seitlich an dem Befestigungselement bzw. der Öffnung vorbeigeht und, dass bei einer Zweiteilung des Montageelements die identisch ausgebildeten Teile zueinander umgekehrt gelegt werden, so dass deren Zungen das Befestigungselement auf beiden Seiten einfassen. Dies hat auch den Vorteil, dass beim Vorsehen von mehreren Montageelementen diese jeweils um 180 Grad um Ihre Längsachse gedreht aufeinander gelegt werden können. Durch die Klemmung des Montagepakets werden die Teile der einzelnen Montageelemente so durch gegenseitige Reibung und das Befestigungselement gesichert, das sich durch die Öffnungen erstreckt, dass seitliches Ausweichen unterbunden wird, was der Zuverlässigkeit der Montageeinrichtung zugutekommt,

Die an ihren dem jeweiligen Abschnitt abgewandten, einander zugewandten und gegeneinander verschiebbaren Enden des oder jedes Montageelements können im unangebrachten Zustand entweder einen kleinen Abstand voneinander aufweisen, aneinander stoßen oder sich teilweise überlappen.

Besonders günstig ist es, wenn sich mindestens auf der einen Seite des Montageelements oder des Montagepakets ein Federelement befindet, das die Abschnitte mindestens teilweise abdeckt und dazwischen mindestens einen in der Ebene des Montagelements federnden Bereich aufweist. Das Federelement ist in Längsrichtung aufgrund des federnden Bereiches leicht dehnbar und auch in Torsion flexibel. Es hindert deshalb nicht die Verformung der Teile des Montageelements bzw. des Montagepakets. Der federnde Bereich verhindert aber eine gegenseitige Verdrehung der Enden des Federelements, die die Abschnitte überdecken, so dass diese Enden des Federelements die Funktion einer Scheibe übernehmen können, ohne die Funktion der Montageeinrichtung zu beeinträchtigen und ohne dass löse Scheiben vorliegen, die leicht den Montageablauf stören könnten.

Besonders günstig ist es auch, wenn das Federelement einen Bereich aufweist, der den Klemmbereich mindestens teilweise überlappt. Dieser Bereich wird dann mitgeklemmt, was die Handhabung der Montageeinrichtung und die Verdrehsicherheit der die Scheiben bildenden Enden weiter erhöht.

Das Federelement ist vorzugsweise zweimal vorgesehen und das zweite Federelement ist auf der anderen Seite des Montageelements oder des Montagepakets angeordnet. Dies führt zu einer symmetrischen Ausbildung der Montageeinrichtung, so dass die Einbaulage unwesentlich ist. Darüber hinaus wird bei Kunststoffteilen eine ordentliche Kraftverteilung bei den geklemmten Abschnitten und bei dem Klemmbereich sichergestellt.

Der oder jeder Federbereich kann eine Schlangen- oder Mäanderform aufweisen. Eine solche Form ist in einem Element, das im Wesentlichen in einer Ebene liegt, leicht herstellbar im Stanz- oder Spritzgussverfahren und leicht in der Länge dehnbar, wodurch eine Anpassung an die S-Form oder verdrehte Form der Montageeinrichtung erreichbar ist.

Wie oben angedeutet, kann das oder jedes Federelement entweder als Blechstanzteil oder als Kunststoffteil ggf. mit Faserverstärkung kostengünstig ausgebildet werden.

Die Montageeinrichtung umfasst vorzugsweise auch eine Klemmeinrichtung, die am Klemmbereich klemmend wirkt und mittels eines Befestigungselements am Träger höhen- bzw. abstandsverstellbar anbringbar ist.

Eine besonders bevorzugte Klemmeinrichtung, insbesondere zur Anwendung mit einer Montageeinrichtung wie oben beschrieben, zeichnet sich durch folgende Merkmale aus:
- durch ein erstes ein Innengewinde aufweisendes Bauteil mit einer Seite, die entweder direkt oder indirekt über ein getrenntes Teil eine erste Klemmfläche bildet,
- durch ein zweites ein Innengewinde und ein Außengewinde aufweisendes Bauteil, das axialverschiebbar aber drehfest am ersten Bauteil anbringbar ist, wobei die jeweiligen Innengewinde des ersten Bauteils und des zweiten Bauteils ausgelegt sind, um mittels eines Bolzenelements mit Außengewinde höhenverstellbar gemeinsam an einen Träger befestigt zu werden, und
- durch eine Kontermutter, die auf das Außengewinde des zweiten Bauteils aufschraubbar ist, deren, der erstgenannten Klemmfläche zugewandten, Seite entweder direkt oder indirekt über ein zweites Teil eine zweite Klemmfläche bildet, wobei die erste und zweite einander zugewandten Klemmfläche zur klemmenden Aufnahme eines Gegenstandes bzw. des Klemmbereichs der Montageeinrichtung ausgelegt sind.

Eine Klemmeinrichtung dieser Art kann als vormontiertes Gesamtpaket leicht auf einen Stehbozen oder Gewindestift oder Nietbolzen oder Stanz- und Nietbolzen oder Einpressbolzen oder Schweißbolzen zum Beispiel von oben aufgeschraubt werden. Die gegenseitige axiale Verschiebbarkeit des ersten Bauteils und des zweiten Bauteils stellt sicher, dass das Gewinde des Stehbolzens, oder einer anderweitigen Bolzenart, beide Bauteile ohne weiteres durchdringen kann, da der Längenausgleich trotz der drehfesten Anordnung eine durchgehende Gewindefurche sicherstellt. Die Drehbarkeit des Gesamtgebildes auf dem Stehbolzen, oder desgleichen, ermöglicht eine genaue Positionierung der Höhe der einen Klemmfläche gegenüber dem Träger. Durch Drehen der Kontermutter kann dann die andere Klemmfläche in Richtung auf die erstgenannte Klemmfläche bewegt werden und die Montageeinrichtung zwischen den Klemmflächen geklemmt werden, ohne die vorher eingestellte Position der erstgenannten Klemmfläche, die den Höhenausgleich sicherstellt, zu stören.

Es versteht sich dass das Innengewinde des ersten Bauteils und das Innengewinde des zweiten Bauteils die gleiche Größe und Steigung haben müssen, damit sie gemeinsam entlang eines Gewindebereichs eine Gewindebozens verfahren werden können.

Da die Montageeinheit im nicht geklemmten Zustand flexibel ist, kann sie die obenerwähnte S-Form passend zu der Fehlorientierung des Stehbolzens, oder desgleichen, automatisch und leicht annehmen, wie auch eine etwaige in einer Querebene gekippte Position des Klemmbereichs, der vollflächig an der erstgenannten Klemmfläche anliegt. Dabei wird die von der Kontermutter gebildete Klemmfläche parallel zur erstgenannten Klemmfläche geführt, so dass auch diese Klemmfläche vollflächig zur Anlage an den Klemmbereich kommt. Beim Festziehen der Kontermutter wird das zweite Bauteil aufgrund der axialen Verschiebbarkeit zwischen dem ersten Bauteil und dem zweiten Bauteil zunächst minimal etwas von dem ersten Bauteil entfernt, wodurch die Kontermutter nun ihre konternde Funktion entfaltet und den Klemmbereich zwischen den beiden Klemmfläche festklemmt und die Montageeinrichtung automatisch in der ausgewählten ausgerichteten Position "einfriert". Die Montageeinrichtung ist nun von einem flexiblen Gebilde in ein eher steifes Gebilde umgewandelt worden, wenn auch eine gewisse dämpfende Wirkung gegeben ist.

Besonders günstig ist es, wenn das erste Bauteil am zweiten Bauteil mittels einer insbesondere leicht lösbarer Verbindung, wie zum Beispiel eine Klickverbindung, oder durch eine eher permanente Verbindung, wie ein umgebördelter Kragen, an dem einen Bauteil, das hinter einem Anschlag des anderen Bauteils eingreift, unter Beibehaltung der relativen axialen Verschiebbarkeit befestigt ist. Hierdurch bilden das erste Bauteil und das zweite Bauteil eine Einheit, die leichter handzuhaben ist, als zwei getrennte Einzelteile. Darüber hinaus wird die Kontermutter auf das Außengewinde des zweiten Bauteils aufgeschraubt und kann ggf. mit einem schwachen Gewindekleber vorfixiert werden, so dass das dreiteilige Gesamtgebilde als eine vormontierte Einheit gehandhabt bzw. transportiert werden kann.

Besonders günstig ist es auch, wenn das zweite Bauteil insbesondere im Bereich seines, dem ersten Bauteils abgewandten, Endes eine Werkzeugaufnahme zur lösbaren Anbringung eines Drehwerkzeugs aufweist, wobei die Werkzeugaufnahme des zweiten Bauteils vorzugsweise in seinen Querabmessungen kleiner ausgebildet ist als die Kontermutter, damit das zweite Bauteil und die Kontermutter mit unterschiedlichen koaxial angeordneten Drehwerkzeugen gemeinsam oder relativ zueinander drehbar sind, und von einer Seite der Konstruktion aus bedient werden können.

Hierdurch kann die obenerwähnte Gesamteinheit mittels der Werkzeugaufnahme am zweiten Bauteil zum Beispiel von oben auf den Gewindestift aufgeschraubt werden und die Kontermutter im gleichen Arbeitsgang angezogen werden.

Die Werkzeugaufnahme des zweiten Bauteils ist vorzugsweise durch eine Innenaufnahme gebildet, die vorzugsweise in das, dem ersten Bauteil abgewandten, Stirnende des zweiten Bauteils vorgesehen ist. Hierdurch kann das zweite Bauteil eine relativ einfache, Material und Platz sparende und leicht herstellbare, Form aufweisen und in etwa wie eine hohle Madenschraube mit Innengewinde oder eine Hülse mit Innen- und Außengewinde hergestellt werden.

Das erste Bauteil kann ebenfalls mit einer Werkzeugaufnahme, insbesondere in Form einer Außenmehrkant, versehen werden. Dies kann von Vorteil sein, wenn die Klemmeinrichtung manuell auf den Gewindestift oder ähnliches montiert wird oder wenn die Position einer automatisch vormontierten Klemmeinrichtung korrigiert werden soll.

Vorteilhaft ist es, wenn das erste Bauteil mit einem Flansch versehen ist, dessen, dem zweiten Bauteil zugewandten, Stirnseite direkt die erste Klemmfläche bildet oder an eine Scheibe angreift, die die erste Klemmfläche bildet. Ein solcher Flansch bzw. eine solche Scheibe vergrößert auf kostengünstigere Weise die Größe der Klemmfläche.

Aus dem gleichen Grund kann die Kontermutter mit einem Flansch versehen werden, dessen, dem ersten Bauteil zugewandten, Stirnseite direkt die zweite Klemmfläche bildet oder an eine Scheibe angreift, die die zweite Klemmfläche bildet.

Die erfindungsgemäße Klemmeinrichtung wird vorzugsweise so angewandt, dass das Außengewinde des zweiten Bauteils sich durch einen Ausschnitt im Klemmbereich der Montageeinrichtung erstreckt, wodurch die Montageeinrichtung zwischen dem ersten Bauteil und der, auf dem zweiten Bauteil aufgeschraubten, Kontermutter klemmbar ist. Dies ist zwar wahrscheinlich die beste Anordnung, ist aber nicht zwingend erforderlich.

Alternativ hierzu könnte das erste Bauteil entweder mit einer seitlich angeordneten Fahne versehen werden, deren, dem zweiten Bauteil zugewandten, Seite direkt die erste Klemmfläche bildet oder an eine Scheibe angreifen, die mit einer seitlich angeordneten Fahne versehen ist, deren, dem zweiten Bauteil zugewandten, Seite die erste Klemmfläche bildet. Hierdurch wird die erste Klemmfläche seitlich versetzt zur mittleren Längsachse des Gewindestifts angeordnet.

Ebenso könnte die Kontermutter entweder mit einer seitlich angeordneten Fahne versehen werden, deren, dem ersten Bauteil zugewandten, Seite direkt die zweite Klemmfläche bildet oder an eine Scheibe angreifen, die mit einer seitlich angeordneter Fahne versehen ist, deren, dem zweiten Bauteil zugewandten, Seite die zweite Klemmfläche bildet.

Diese seitlich versetzte Anordnung der ersten Klemmfläche und der zweiten Klemmfläche bildet dann eine Art U-förmige Klemmaufnahme, in der beispielsweise der Klemmbereich der Montageeinrichtung klemmbar ist. Die Klemmeinrichtung, bis auf die die Klemmflächen bildenden Teile, würde dann seitlich an der Montageeinrichtung vorbeilaufen.

Die erfindungsgemäße Montageeinrichtung und die erfindungsgemäße Klemmeinrichtung werden nachfolgend anhand von Ausführungsbeispielen unter Bezugnahme auf die Zeichnungen näher erläutert, in welchen zeigen:
- Fig. 1A: eine perspektivische Darstellung eines Projektors eines Head-Up-Displays, das an vier Stellen mit Montageeinrichtungen versehen ist,
- Fig.1B: eine vergrößerte perspektivische Darstellung der umkreisten Montageeinrichtung der Fig. 1A,
- Fig. 2A: eine perspektivische Darstellung einer bevorzugten Montageplatz für einen Projektor, ähnlich dem Projektor der Fig. 1A, jedoch mit drei Montagestellen anstelle von vier,
- Fig.2B: eine Darstellung ähnlich der Fig. 2A, bei der jedoch Fehlorientierungen und Positionen der für die Montage vorgesehenen Gewindebolzen angedeutet sind,
- Fig.3A: eine Seitenansicht der Montageeinrichtung der Fig.1B, in Pfeilrichtung III gesehen,
- Fig.3B: eine vergrößerte Darstellung des umkreisten Bereichs der Fig. 3A,
- Fig. 3C: eine Draufsicht auf die Montageeinrichtung der Fig. 3A in Pfeilrichtung IV gesehen,
- Fig. 3D: eine Darstellung ähnlich der Fig. 3A, jedoch mit der Montageeinrichtung in einer S-förmig gebogenen Form,
- Fig. 3E: eine Darstellung ähnlich der Fig. 1B, jedoch mit der Montageeinrichtung in einer in einer Querebene gekippten Position,
- Fig. 4A-E: eine Draufsicht (Fig. 4A), eine Seitenansicht (Fig. 4B) und eine perspektivische Ansicht (Fig.4C) eines erfindungsgemäßen Montagelements, wobei die Fig. 4D der Ansicht der Fig. 4B entspricht, jedoch mit dem Montageelement entsprechend der Fig. 3D in S-Form gebogen und die Fig. 4E ebenfalls der Ansicht der Fig. 4B entspricht, jedoch mit dem Klemmbereich des Montageelements gekippt, entsprechend der Darstellung der Fig. 3E,
- Fig. 5A-C: eine Draufsicht, eine Seitenansicht und eine perspektivische Ansicht eines erfindungsgemäßen Federelements,
- Fig. 6: eine Draufsicht auf ein dreiarmiges erfindungsgemäßes Montageelement,
- Fig. 7: eine Draufsicht auf ein vierarmiges erfindungsgemäßes Montageelement,
- Fig. 8A-C: eine perspektivische Darstellung einer erfindungsgemäßen Klemmeinrichtung, die mit der erfindungsgemäßen Montageeinrichtung gemäß den vorherigen Figuren verwendet werden kann, eine in Längsrichtung geschnittene Darstellung der Klemmeinrichtung der Fig. 8B und eine vergrößerte Darstellung des umkreisten Bereichs der Darstellung gemäß Fig. 8B,
- Fig. 9A-F: das erste Bauteil der erfindungsgemäßen Klemmeinrichtung der Fig. 8A bis C in einer Ansicht von oben, in einer Längsebene geschnittene Ansicht, in einer Seitenansicht, in einer vergrößerten perspektivischen Ansicht eines mit Längsrippen versehenen Innenbereichs, in einer perspektivischer Ansicht von unten und in einer perspektivischer Ansicht von oben,
- Fig. 10A-F: das zweite Bauteil der erfindungsgemäßen Klemmeinrichtung der Fig. 8A bis C in einer Ansicht von oben, in einer Längsebene geschnittene Ansicht, in einer Seitenansicht, in einer vergrößerten perspektivischen Ansicht eines mit Längsrippen versehenen Innenbereichs, in einer perspektivischer Ansicht von unten und in einer perspektivischer Ansicht von oben,
- Fig. 11: eine perspektivische Darstellung ähnlich der Fig. 8A, bei der aber das erste Bauteil mit einer seitlichen Fahne versehen ist, die die eine erste Klemmfläche bildet, und die Kontermutter über eine getrennte Scheibe mit seitlicher Fahne wirkt, die eine zweite Klemmfläche bildet, und
- Fig. 12: eine Darstellung ähnlich der 9C jedoch mit einer alternativen Ausbildung des ersten Bauteils mit Sechskantaufnahme für ein Werkzeug.

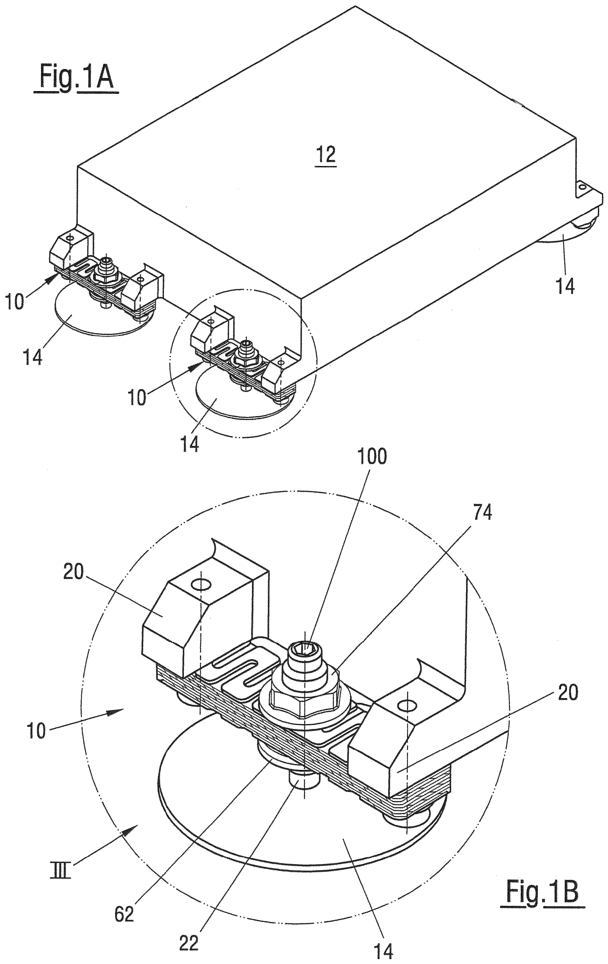

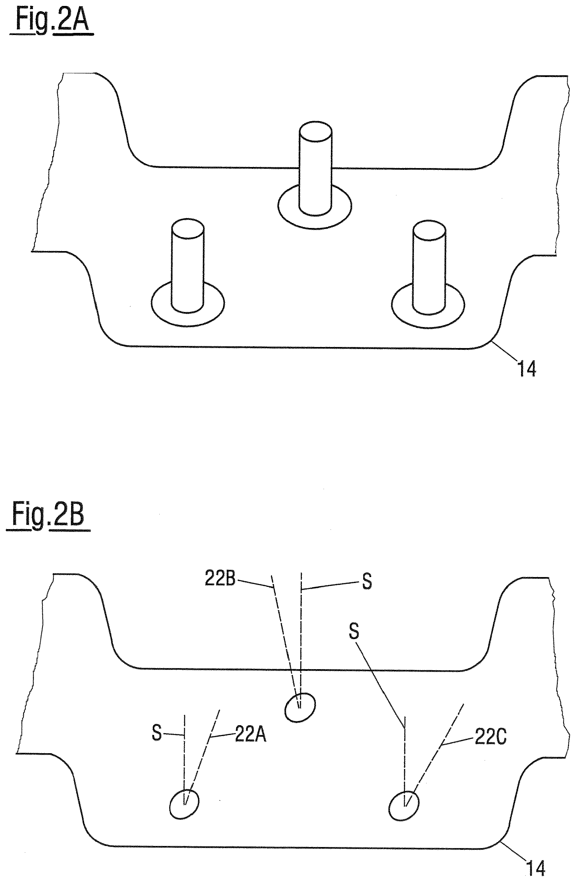

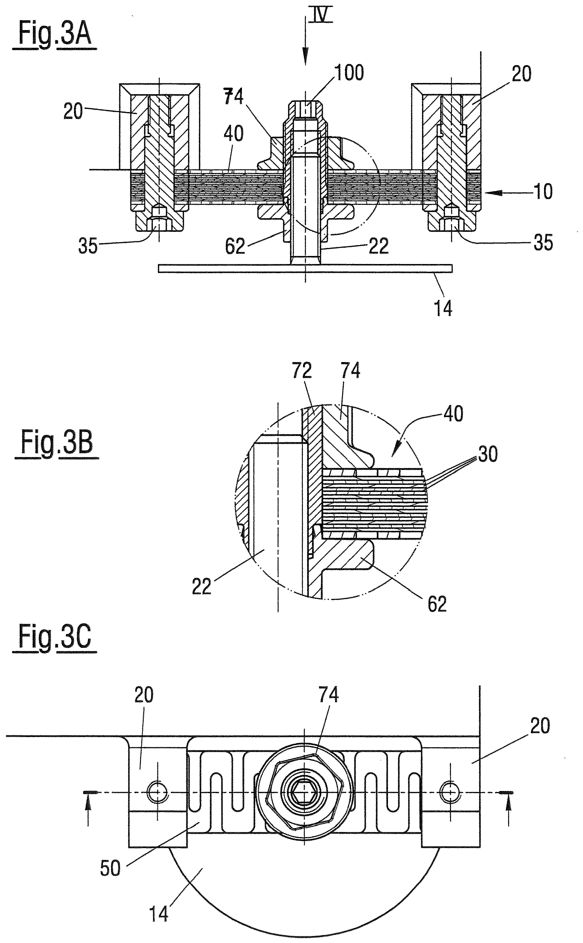

In den Fig. 1A und 1B sind drei erfindungsgemäße Montageeinrichtungen 10 gezeigt, die eine einstellbare und feststellbare winkelmäßige Anpassung eines Gegenstandes 12, hier in Form eines Projektors für ein Head-up-Display, an einen Träger 14 zulässt. Im konkreten Ausführungsbeispiel sind vier Montageeinrichtungen 10 vorhanden, von denen zwei auf der Vorderseite und zwei auf der Rückseite des quaderförmigen Projektors 2 benachbart zu dessen vertikalen Kanten 16 angeordnet sind, wobei die eine Montageeirichtung an der Rückseite in der Darstellung nicht ersichtlich ist. Konkret ist jede Montageeinrichtung an ihren Enden mittels Schraubbolzen 35 (Fig. 3A bis 3E) an entsprechenden Halterungen 20 des Projektors befestigt. Der Träger 14 ist hier nur durch Kreise angedeutet, wird aber in diesem konkreten Beispiel üblicherweise durch eine Blechstruktur eines Kraftwagenarmaturenbretts gebildet, von dem ein Ausschnitt in schematischer Form detaillierter in Fig. 2A gezeigt ist. Allerdings kommen im Beispiel der Fig. 2A nur drei Montagepunkte für den Projektor 12 zum Einsatz, hier in der konkreten Form von länglichen Stanz- und Nietbolzen 22, die am Blechteil angenietet sind. Es können zum Beispiel SBF-Stanz- und Nietbolzen der Anmelderin zum Einsatz kommen, die mit ihrem Kopfteil 24 am Blech vernietet sind. Die nach oben weisende Gewinde aufweisende Schaftteile 22 der Stanz-und Nietbolzen gehen jeweils durch eine Klemmeinrichtung 28 in der Mitte jeder Montageeinrichtung, wie in den Fig. 1A und 1B gezeigt.

Die Fig. 2B zeigt, dass die Schaftteile 22 der Stanz- und Nietbolzen, die nachfolgend nur Gewindestifte genannt werden, Fehlorientierungen und Positionsfehler aufweisen können, die es zu kompensieren gilt, was mittels der erfindungsgemäßen Montageeinrichtungen 10 möglich ist, wie später näher erläutert wird.

Aus der Fig. 2B ist ersichtlich, dass die Gewindestifte 22A und 22B winkelmäßige Abweichungen von der Sollposition, die durch eine gestrichelte Linie gezeigt ist, aufweisen und der dritte Gewindestift 22C seitlich versetzt von der Sollposition ist.

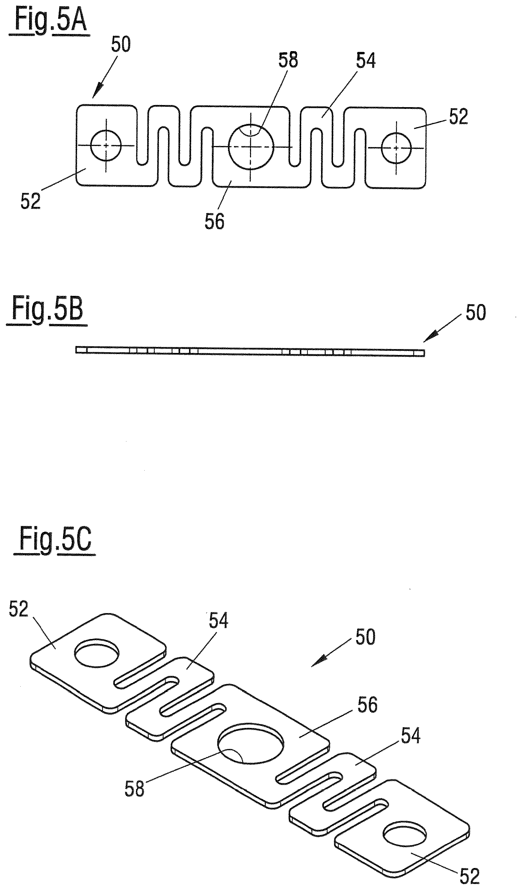

Die konkrete Konstruktion einer Montageeinrichtung 10 wird nunmehr genauer anhand der weiteren Figuren 3A bis 3E, 4A bis 4E und 5A bis 5C erklärt.

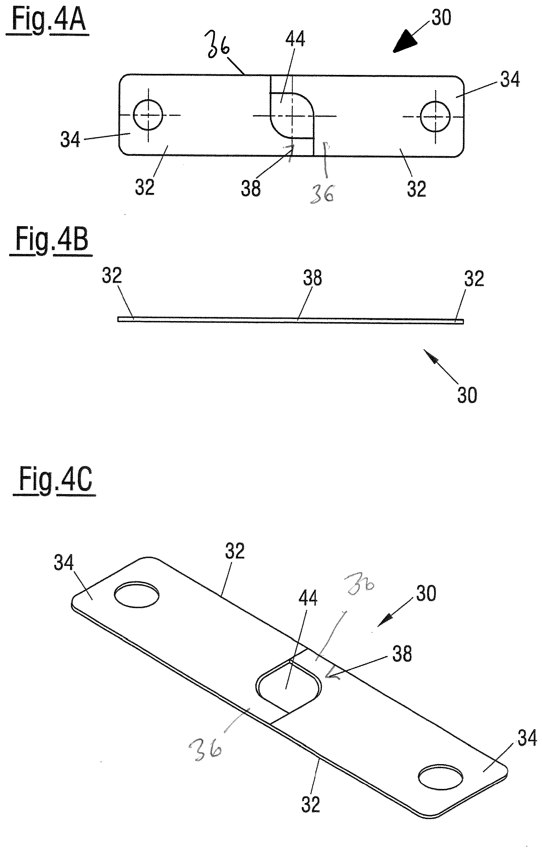

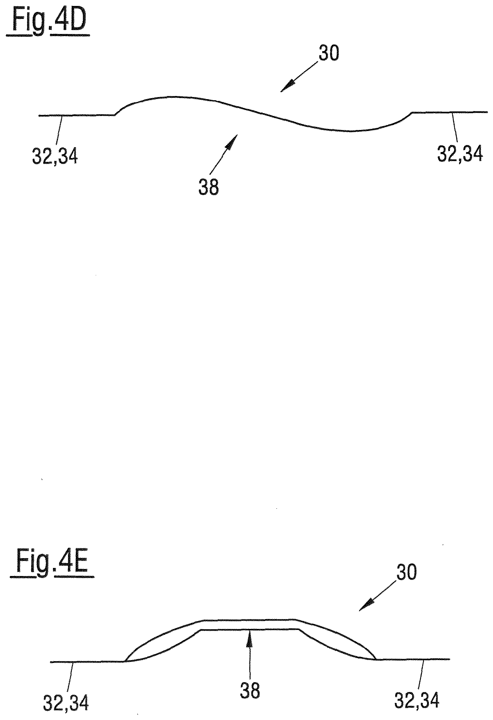

Die Montageeinrichtung 10 umfasst mindestens ein geteiltes Montageelement 30 gemäß Fig. 4A bis C, dessen zwei getrennte Teile 32 jeweils in einem Endbereich 34 einen Abschnitt aufweisen, der eine Befestigung an dem Gegenstand 12 direkt oder an einer jeweiligen am Gegenstand angebrachten Halterung 20 ermöglicht, und die an ihren, dem jeweiligen Abschnitt abgewandten, einander zugewandten und gegeneinander verschiebbaren, Enden 36 gemeinsam einen Klemmbereich 38 bilden, der eine Befestigung an dem Träger 14 ermöglicht.

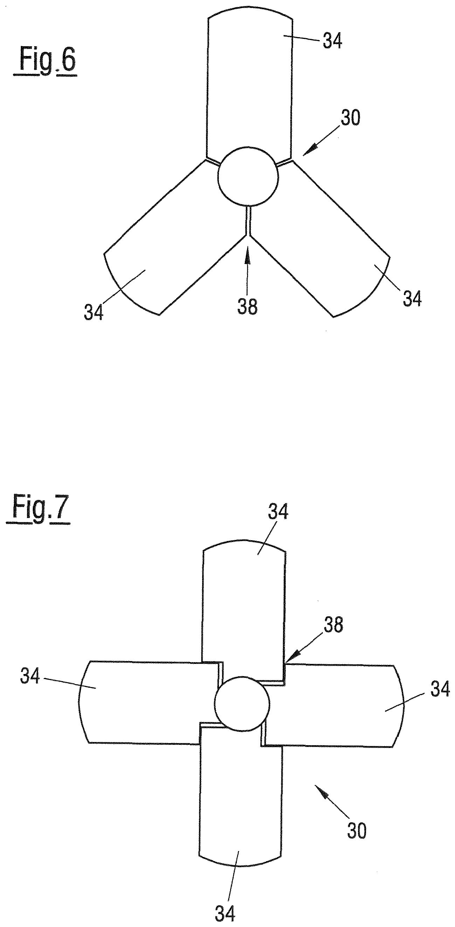

Das hier gezeigte zweiteilige Montageelement 30 kann als zweiarmig bezeichnet werden. Grundsätzlich ist auch eine einarmige Ausführung möglich. Das entsprechende, mehrlagige Montageelement sähe dann in etwa wie in Fig. 3A gezeigt aus, wobei dann nur eine Halterung 20 und dementsprechend nur in etwa die Hälfte der in Fig. 3A gezeigten Montageeinrichtung 10 vorgesehen sind. Bildlich könnte man die Montageeinrichtung bei dieser Ausführungsform zumindest als eine viertel-elliptische Blattfederung bei einer Hinterachse eines Kraftfahrzeugs auffassen, wobei allerdings durch die Klemmung an beiden Enden der Lagen die Montageeinrichtung hinreichend steif wird. Es sind allerdings auch drei- oder viergeteilte Ausführungen denkbar, die dann als drei- oder vierarmig bezeichnet werden. Beispiele für solche drei- oder vierarmige Montageelemente sind in den Fig. 6 und 7 gezeigt und die hier gegebene Beschreibung gilt auch sinngemäß für die Ausführungsformen nach den Fig. 6 und 7, in denen die entsprechenden Bezugszeichen soweit sinnvoll eingetragen sind.

Wie in den Fig. 3A bis 3C gezeigt, kommen normalerweise mehrere geteilte, gleichartig ausgebildete Montageelemente 30 in einer Montageeinrichtung 10 zur Anwendung. Sie sind übereinander gelegt ausgerichtet und bilden ein Montagepaket 40.

Die Teile 32 des oder jedes Montageelements 30 sind gleich ausgebildet und werden als Blechstanzteile oder als Kunststoffteil ggf. mit Faserverstärkung ausgebildet.

Die Abschnitte an den Enden 34 der Teile 32, die der Befestigung am Gegenstand bzw. an Halterungen des Gegenstands dienen, haben üblicherweise Ausschnitte, die beispielsweise als Befestigungslöcher ausgebildet sind. Sie werden mittels Befestigungsbolzen 35 an den Halterungen 20 angebracht.

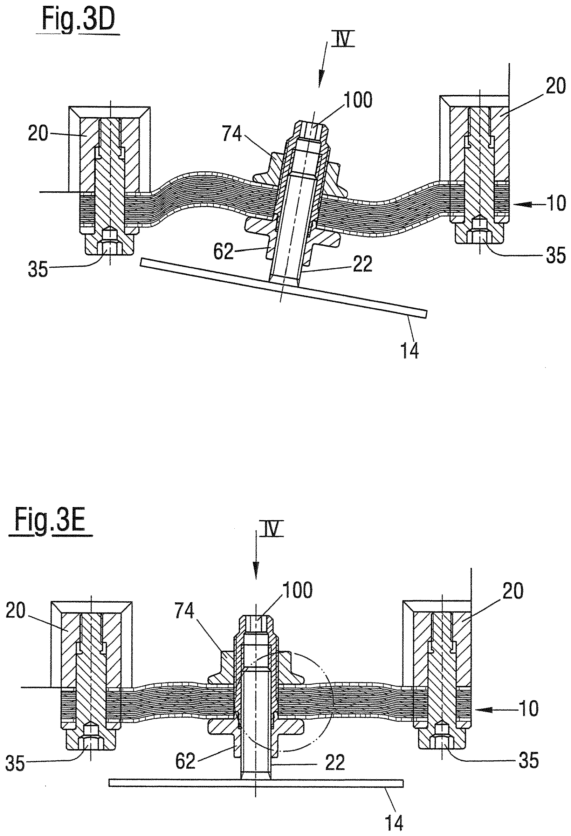

Die einander zugewandten Enden 36 der Teile 32 sind gegeneinander verschiebbar. In der ausgerichteten Stellung nach den Fig. 3A bis 3C können sie sich berühren, oder einen kleinen Abstand voneinander aufweisen. Bei Verformung der Montageelemente, wie in Fig. 3D oder 3E gezeigt, bewegen sie sich etwas auseinander. Die Teile können sich auch an ihren Enden 36 gegenseitig überlappen. In dem Fall wird der Grad der Überlappung bei Verformung des Montagelements verkleinert. In den gezeigten Beispielen weisen die einander zugewandten Enden 36 der Teile 32, die den Klemmbereich 38 bilden, jeweilige Ausschnitte 42 auf, die gemeinsam eine Öffnung 44 zur Aufnahme einer Klemmeinrichtung wie 28 (Fig. 1B) bilden.

Wie in den Fig.3A bis 3C gezeigt, bildet jedes der Teile 32 eines Montageelements 30 im Bereich des Ausschnittes 42 eine Zunge 46, die seitlich an dem Befestigungselement vorbeigeht. Bei der gezeigten Zweiteilung des Montageelements 10 sind die identisch ausgebildeten Teile 32 zueinander umgekehrt gelegt, so dass deren Zungen 46 die Klemmeinrichtung auf beiden Seiten einfassen. Beim Vorsehen von mehreren Montageelementen werden diese jeweils um 180 Grad um Ihre Längsachse 48 gedreht aufeinander gelegt, was der Stabilität der Montageeinrichtung zugutekommt.

Es ist bevorzugt, wenn mindestens auf der einen Seite des Montageelements 10, oder des Montagepakets 40, ein Federelement 50 gelegt ist, das den Befestigungsabschnitt an den Enden 34 mit einem flächigen Bereich 52 mindestens teilweise abdeckt und dazwischen mindestens einen in der Ebene des Montagelements federnden Bereich 54, hier zwei federnde Bereiche 54, aufweist. Der oder jeder Federbereich weist eine Schlangen- oder Mäanderform auf. Ferner hat das Federelement 50 vorzugsweise einen mittleren Bereich 56, der den Klemmbereich 38 mindestens teilweise überlappt und eine Öffnung 58 aufweist, die der Öffnung 44 entspricht.

In den gezeigten Beispielen ist das Federelement 50 zweimal vorgesehen, wobei die Federelemente einmal oberhalb des Montagepakets 40 und einmal unterhalb des Montagepakets 40 angeordnet sind. Auch das Federelement oder jedes Federelement kann als Blechstanzteil oder als Kunststoffteil ggf. mit Faserverstärkung ausgebildet werden.

Wie bereits angedeutet, weist jede Montageeinrichtung auch eine Klemmeinrichtung 28 auf, die am Klemmbereich klemmend wirkt und mittels eines Gewindestifts 22 am Träger 14 höhen- bzw. abstandsverstellbar anbringbar ist.

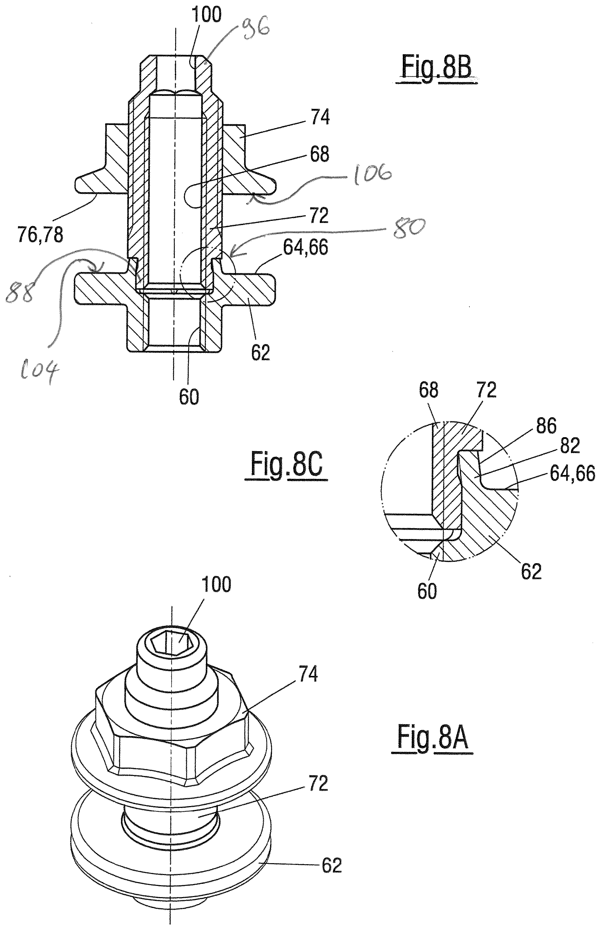

Konkret weist die Klemmeinrichtung 28 gemäß den Fig. 8A bis C folgende Bauteile auf:
- Ein erstes, ein Innengewinde 60 aufweisendes, Bauteil 62 mit einer Seite 64, die entweder direkt oder indirekt über ein getrenntes Teil eine erste Klemmfläche 66 bildet.
- Ein zweites, ein Innengewinde 68 und ein Außengewinde 70 aufweisendes, Bauteil 72, das axialverschiebbar aber drehfest am ersten Bauteil 62 angebracht ist, wobei die jeweiligen Innengewinde 60, 68 des ersten Bauteils 62 und des zweiten Bauteils 72 ausgelegt sind, um mittels eines Bolzenelements 22 mit Außengewinde axialverstellbar gemeinsam an dem Träger 14 befestigt zu werden,
- Eine Kontermutter 74, die auf das Außengewinde 70 des zweiten Bauteils 72 aufgeschraubt ist, dessen, der erst genannten Klemmfläche 66 zugewandten, Seite 76 eine zweite Klemmfläche 78 bildet.

Die erste und zweite einander zugewandten Klemmflächen 66, 78 sind zur klemmenden Aufnahme des Klemmbereichs 38 der Montageeinrichtung 10 ausgelegt.

Die Klemmeinrichtung 28 kann auch für ganz andere Klemmzwecke verwendet werden, in diesem Fall wird der zu klemmende Gegenstand zwischen den Klemmflächen 66, 78 angeordnet.

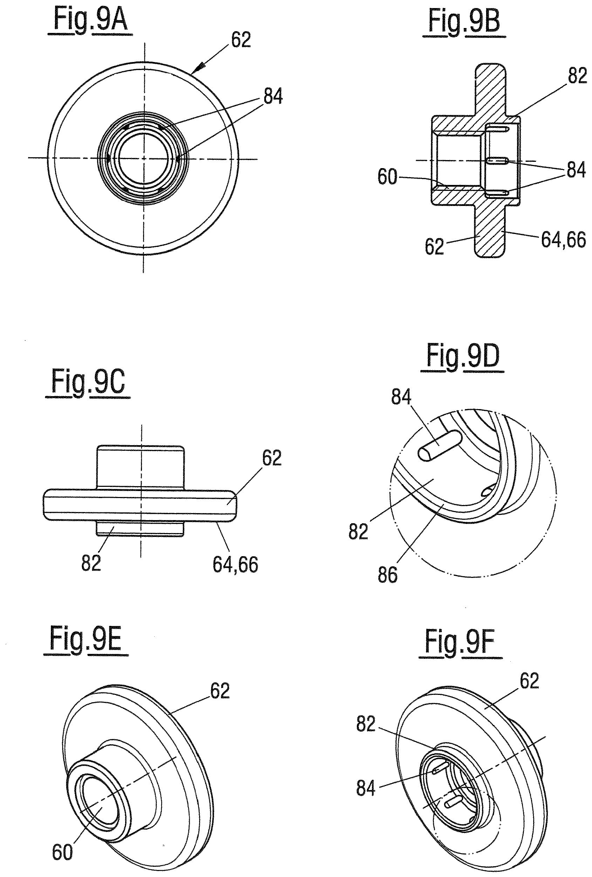

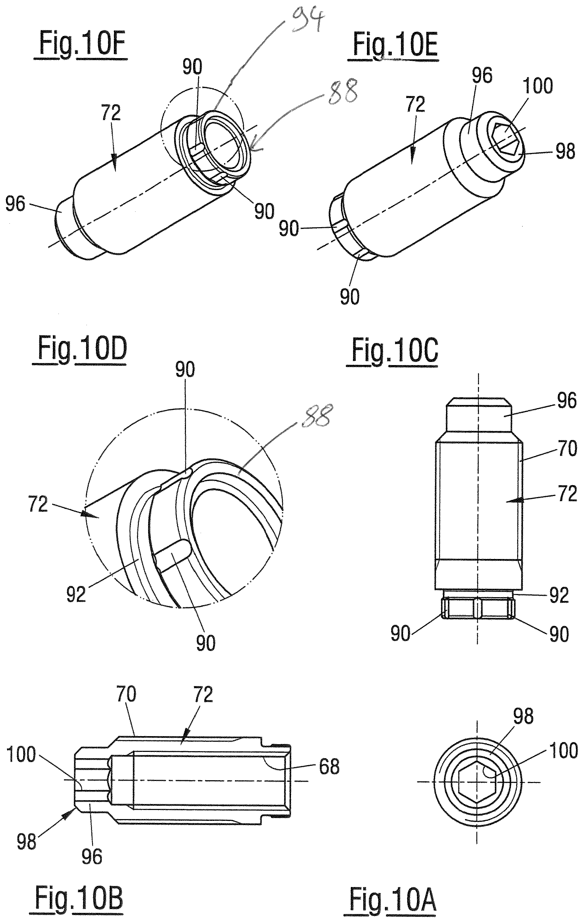

Das erste Bauteil 62 ist unter Beibehaltung der relativen axialen Verschiebbarkeit mittels einer insbesondere leicht lösbaren Verbindung 80 an dem zweiten Bauteil 72, in dieser Ausführung durch eine Klickverbindung befestigt, dessen Details am besten aus den einzelnen Zeichnungen der Fig. 9A bis F und 10A bis F hervorgehen.

Das obere Ende des ersten Bauteils ist als Hohlzylinder 82 mit Längsrippen 84 an der inneren Fläche des Hohlzylinders ausgebildet, wobei ein Ringbereich 86 oberhalb der Rippen leicht nach Innen geneigt ist (am besten bei 86 aus der Fig. 8C ersichtlich). Das untere Ende 88 des zweiten Bauteils 72 ist im Durchmesser gegenüber dessen Außengewinde 70 verkleinert und weist innere Längsnuten 90 auf, in die die Längsrippen 84 des ersten Bauteils gleitend aufgenommen sind, wodurch die gegenseitige axiale Verschiebbarkeit bei einer drehfesten Anordnung der beiden Bauteile 62, 72 sichergestellt ist. Dabei greift der radial nach Innen gerichtete Ringbereich 86 am freien Ende des Hohlzylinders 82 in eine Ringnut 92 hinter den Längsnuten 90 des zweiten Bauteils 72. Der Zylinderbereich 94 am unteren Ende des zweiten Bauteils greift somit in den Hohlzylinder 82 des ersten Bauteils 62. Die zwei Bauteile 62 und 72 sind somit aneinander befestigt aber immer noch gegeneinander axial verschiebbar, wobei das Ausmaß der axialen Verschiebbarkeit nicht mehr als die axiale Länge eines Gewindegangs betragen muss, was durch die Breite der Ringnut 92 bestimmt werden kann.

Anstelle einer Klickverbindung kann eine permanente Verbindung unter Beibehaltung der relativen axialen Verschiebbarkeit erreicht werden, wenn zum Beispiel der Ringbereich 86 wie ein Nietbördel noch tiefer in die Ringnut 92 hineingepresst wird.

Das zweite Bauteil 72 weist insbesondere im Bereich seines, dem ersten Bauteil 62 abgewandten, oberen Endes 96 eine Werkzeugaufnahme 98 zur lösbaren Anbringung eines Drehwerkzeugs auf. Die Werkzeugaufnahme 98 des zweiten Bauteils ist in seinen Querabmessungen kleiner ausgebildet als die Kontermutter 74, damit das zweite Bauteil 72 und die Kontermutter 74 mit unterschiedlichen koaxial angeordneten Drehwerkzeugen gemeinsam oder relativ zueinander drehbar sind.

Die Werkzeugaufnahme 98 des zweiten Bauteils ist am einfachsten durch eine Innenaufnahme 100 nach Art einer Imbusschraube oder einer Torxaufnahme gebildet, die vorzugsweise in dem, dem ersten Bauteil abgewandten, Stirnende des zweiten Bauteils vorgesehen ist.

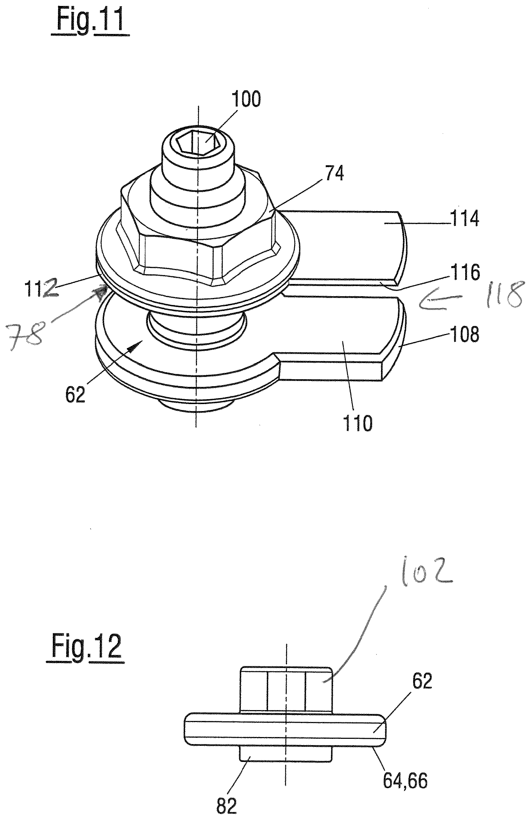

Das erste Bauteil kann ebenfalls mit einer Werkzeugaufnahme 102 versehen werden, die insbesondere in Form einer Außenmehrkant, wie ein Außensechskant, ausgebildet sein kann, wie in der Fig. 12 gezeigt ist. Diese Werkzeugaufnahme 102 kann von Vorteil sein, zum Beispiel dann, wenn die Klemmeinrichtung 28 von Hand betätigt wird. Sollte eine Werkzeugaufnahme wie 102 am ersten Bauteil 62 vorgesehen werden, könnte auf eine Werkzeugaufnahme wie 98 am zweiten Bauteil 72 verzichtet werden.

In dem Beispiel gemäß Fig. 8A bis C ist das erste Bauteil mit einem integrierten Flansch 104 versehen ist, dessen, dem zweiten Bauteil zugewandten, Stirnseite direkt die erste Klemmfläche bildet. In der gleichen Weise ist die Kontermutter 74 mit einem integrierten Flansch 106 versehen, dessen, dem ersten Bauteil 62 zugewandten, Stirnseite direkt die zweite Klemmfläche 78 bildet. Alternativ hierzu könnte die Kontermutter 74, wie in Fig. 11 gezeigt an eine separate Scheibe 112 angreifen, die die zweite Klemmfläche 78 bildet.

Man sieht aus den Fig. 3A bis C, dass sich ein Bereich des Außengewindes 70 des zweiten Bauteils 72 und der Bereich des Übergangs vom ersten Bauteil 62 in den zweiten Bauteil 72 durch die Öffnung 44 der Montageeinrichtung 10 hindurch erstreckt. Mit anderen Worten erstreckt sich das Außengewinde 70 des zweiten Bauteils durch den Ausschnitt im Klemmbereich 38 der Montageeinrichtung 10, wobei die Montageeinrichtung zwischen dem ersten Bauteil 62 und der auf dem zweiten Bauteil 72 aufgeschraubten Kontermutter 74 klemmbar ist.

Die gegenseitige axiale Verschiebbarkeit des ersten Bauteils 62 und des zweiten Bauteils 72 stellt sicher, dass das Gewinde des Stehbolzens 22 beide Bauteile ohne weiteres durchdringen kann, da der Längenausgleich trotz der drehfesten Anordnung eine durchgehende Gewindefurche sicherstellt. Die Drehbarkeit der Klemmeinrichtung als Einheit auf dem Stehbolzen 22 ermöglicht eine genaue Positionierung der Höhe der einen Klemmfläche 66 gegenüber dem Träger 14. Durch Drehen der Kontermutter kann dann die andere Klemmfläche 78 in Richtung auf die erstgenannte Klemmfläche 66 zu bewegt werden, und die Montageeinrichtung 10 zwischen den Klemmflächen 66 und 78 geklemmt werden, ohne die vorher eingestellte Position der erstgenannten Klemmfläche 66, die den Höhenausgleich sicherstellt, zu stören. Da die Montageeinheit 10 im nicht geklemmten Zustand flexibel ist, kann sie die S-Form gemäß Fig. 3D passend zu der Fehlorientierung des Stehbolzens 22 oder desgleichen automatisch und leicht annehmen, wie auch eine etwaige in einer Querebene gekippte Position des Klemmbereichs gemäß Fig. 3E, der vollflächig an der erstgenannten Klemmfläche 66 anliegt. Dabei wird die von der Kontermutter 74 gebildete Klemmfläche 78 parallel zur erstgenannten Klemmfläche 66 geführt, so dass auch diese Klemmfläche 78 vollflächig zur Anlage an den Klemmbereich kommt. Beim Festziehen der Kontermutter 74 wird das zweite Bauteil 72 aufgrund der beschränkten axialen Verschiebbarkeit zwischen dem ersten Bauteil 62 und dem zweiten Bauteil 72 zunächst minimal etwas von dem ersten Bauteil 62 entfernt, wodurch die Kontermutter 74 nun ihre konternde Funktion entfaltet und den Klemmbereich zwischen den beiden Klemmflächen 66, 78 festklemmt. Hierdurch wird die Montageeinrichtung automatisch in der ausgewählten ausgerichteten Position "eingefroren". Die Montageeinrichtung ist nun von einem flexiblen Gebilde in ein eher steifes Gebilde umgewandelt worden, wenn auch eine gewisse dämpfende Wirkung noch gegeben ist.

Wie in Fig. 12 gezeigt ist, kann der Klemmbereich der Klemmeinrichtung seitlich von der mittleren Längsachse verlagert werden. Hierzu wird das erste Bauteil entweder mit einer seitlich angeordneten Fahne 108 versehen, deren, dem zweiten Bauteil 72 zugewandten, Seite 110 direkt die erste Klemmfläche 66 bildet. Die Kontermutter 74 drückt dann an eine getrennte Scheibe 112, die ebenfalls mit einer seitlich angeordneter Fahne 114 versehen ist, deren, dem ersten Bauteil 62 zugewandte Seite 116 die zweite Klemmfläche 78 bildet. Die zweite Klemmfläche 78 unddie erste Klemmfläche 66 formen gemeinsam eine U-förmige Klemmaufnahme 118.

Zwischen der seitlich angeordneten ersten Klemmfläche 66 der Klemmeinrichtung 28 und der seitlich angeordneten zweiten Klemmfläche 78 der Klemmeinrichtung 28 wird eine U-förmige Klemmaufnahme gebildet, die wie bei einem Schraubenstock einen Gegenstand, hier den Klemmbereich der Montageeinrichtung 10, klemmend aufnehmen kann.

Die Bauteile der Klemmeinrichtung sind vorzugsweise alle aus Metall ausgebildet, könnten aber alternativ hierzu einzeln, oder alle, aus faserverstärktem Kunststoff bestehen. Wenn sie aus Metall bestehen, dann werden sie vernünftigerweise wie Befestigungselemente im Allgemeinen als Kaltschlagteile angefertigt.

Der Zusammenbau der kompletten Montageeinrichtung kann auf verschiedener Weise erfolgen.

Es ist zum Beispiel möglich, der Montagepaket 40, oder nur die zwei Teile eines einzigen Montageelements 30, mit oder ohne eines Federelements 40 oder beider Federelemente 50, falls ein solches überhaupt vorhanden ist, an die Halterungen 20 des Gegenstandes mittels Befestigungsschrauben 35 anzuschrauben, die durch die Befestigungslöcher eingeführt werden, die die Ausschnitte an den Enden 34 der Teile 32 jedes Montageelements bilden. Wenn ein Federelement 50 vorgesehen ist, werden die Befestigungsbolzen auch durch die entsprechenden Löcher an den Enden des Federelements geführt. Wird nur ein Federelement 50 verwendet, wird dies üblicherweise unterhalb der Köpfe der Befestigungsschrauben 35 gelegt. Wenn zwei Federelemente vorgesehen sind, ist es egal welches oben und welches unten liegt.

Als nächstes wird die Klemmeinrichtung 28 montiert. Dies kann dadurch erfolgen, dass das erste Bauteil 62 von unten kommend mit dem unteren Ende des von oben kommenden zweiten Bauteils 72, das durch die Öffnung 44 hindurchgeführt wird, mittels der beschriebenen Klickverbindung zusammengefügt werden. Die Kontermutter 74 kann vorher auf das zweite Bauteil aufgeschraubt werden, oder erst jetzt, ist aber noch nicht festgezogen worden. Der Gegenstand mit den montierten Montageeinrichtungen wird dann auf dem Träger positioniert, so dass jede Schraubbolzen 22 mit der dazu zugeordneten Montageeinrichtung 10 ausgerichtet ist. Dies kann manuell oder automatisch erfolgen. Eine Hilfe bietet hier ein ausgeprägter Einführkonus am unteren Ende jedes erste Bauteil 62. Da die Kontermutter 74 noch nicht festgezogen sind, (ist bei nur eine Montageeinrichtung 10) sind die Montageelemente 30 bzw. die Montagepakete 40 noch flexibel und passen sich automatisch die aktuelle Winkelposition der Schraubbolzen 22 an. Durch Drehen der aus dem ersten Bauteil 62 und dem zweiten Bauteil 72 bestehende Einheit wird diese Einheit entlang des jeweiligen Schraubbolzens 22 bewegt, bis die erwünschte Position erreicht ist. Die Klemmfläche 66 bestimmt dann die Position des Gegenstandes 12. Die axiale Verschiebbarkeit zwischen dem ersten Bauteil 62 und dem zweiten Bauteil 72 stellt sicher, dass das Gewinde des Schraubbolzens 22 hindurchgeführt werden kann obwohl diese drehfest aneinander befestigt sind. Sonst wäre dies nicht möglich, da der genaue Anfang der beiden Innengewinde 60 und 68 in Bezug auf die mittlere Längsachse des ersten Bauteils 62 und des zweiten Bauteils 72 wenigstens bei den üblichen Herstellungsmethoden nicht vorhersehbar ist und daher kompensiert werden muss.

Wenn die erwünschte Position erreicht ist, wird die Kontermutter 74 festgezogen damit die zweite Klemmfläche 78 in Eingriff mit dem Klemmbereich 38 der Montageeinrichtung 10 kommt und der leicht verformte Zustand des jeweiligen Montageelements 30 bzw. des jeweiligen Montagepakets 40 eingefroren wird. Die Montage ist erfolgt.

Denkbar ist auch das Montageelement 30, oder das Montagepaket 40, ggf. mit einem Federelement 50 oder mit zwei Federelementen 50 mit der Klemmeinrichtung vor der Montage an den Gegenstand 12 oder an dessen Halterungen zusammenzubauen. Die Kontermutter 74 können (kann) dann angezogen werden um die Montageeinrichtung zusammenzuhalten. In diesem Fall werden (wird) die Kontermutter 74 dann wieder gelockert werden müssen vor der Anbringung der Klemmeinrichtung an die Schraubbolzen 22. Alternativ hierzu könnten die Befestigungsbolzen 35, die der Befestigung der Montageeinrichtung 10 an dem Gegenstand 12 bzw. an den Halterungen 20 dienen, vorher an die Montageeinrichtung 10 montiert werden um den Zusammenhalt der Teile zu gewährleisten. Zum Beispiel könnten die Befestigungsbolzen 35 als Gewindeführende- oder Schneidende-Bolzen ausgeführt werden, die nur in der unterste Lage des jeweiligen Montagepakets 40 (je nach Auslegung ein Montageelement 30 oder ein Federelement 50) ein Gewinde formt oder schneidet. Bei der endgültigen Anbringung am Gegenstand 12, oder an den Halterungen 20, werden beim Weiterdrehen der Befestigungsbolzen 35, die in der untersten Lage geformten Gewinde zerstört, haben aber bereits ihr Zweck des provisorischen Zusammenhalts erfüllt.

Auch könnten andere Hilfsmittel dem Zweck des provisorischen Zusammenhalts Erfüllen, zum Beispiel könnte Schrumpfschlauch verwendet werden um die Montageeinheit zusammenzuhalten.

Die vorherige Montage der Befestigungsbolzen 35 hat auch Vorteile bei der Automatische Montage. Besonders günstig wäre es wenn die Befestigungsbolzen 35 von oben kommend an den Gegenstand 12 bzw. an den Halterungen 20 angebracht werden. Dann könnten die gesamte Montage einer Montageeinheit 10 mit einer automatisierten Einrichtung mit entsprechenden Drehwerkzeugen von oben kommend erfolgen.

In manchen Einbausituationen können das erste Bauteil und das zweite Bauteil mit Vorteil vertauscht werden, beispielsweise so, dass das erste Bauteil 62 oben und das zweite Bauteil 72 unten angeordnet ist.

### Bezugszeichenliste

- 10: Montageeinrichtung
- 12: Projektor, Gegenstand
- 14: Träger
- 16: vertikale Kanten vom Gegenstand 12
- 20: Halterung
- 22: Stanz- und Nietbolzen, Befestigungselement
- 24: Kopfteil des Stanz- und Nietbolzens 22
- 26: Schaftteil des Stanz- und Nietbolzens, Gewindestift
- 28: Klemmeinrichtung
- 30: Montageelement
- 32: Teil des Montageelements 30
- 34: Endbereich von Teil 32, Abschnitt
- 35: Befestigungsbolzen
- 36: anderes Ende von Teil 32
- 38: Klemmbereich von Montageelement 30
- 40: Montagepaket
- 42: Ausschnitt an den Enden 36 der Teile 32, Befestigungsloch
- 44: Öffnung
- 46: Zunge
- 48: Längsrichtung von Montageelement 30
- 50: Federelement
- 52: flächiger Bereich vom Federelement 50
- 54: federnder Bereich vom Federelement 50
- 56: mittlerer Bereich vom Federelement 50
- 58: Öffnung vom Federelement 50
- 60: Innengewinde vom ersten Bauteil 62
- 62: erstes Bauteil
- 64: Seite von ersten Bauteil 62
- 66: Klemmfläche
- 68: Innengewinde vom zweiten Bauteil 72
- 70: Außengewinde vom zweiten Bauteil 72
- 72: zweites Bauteil
- 74: Kontermutter
- 76: Seite von der Kontermutter
- 78: zweite Klemmfläche
- 80: Verbindung zwischen dem ersten Bauteil 62 und dem zweiten Bauteil 72
- 82: Hohlzylinder am oberen Ende vom ersten Bauteil 62
- 84: Längsrippen
- 86: Ringbereich am Ende des Hohlzylinders 82
- 88: unteres Ende des zweiten Bauteils 72
- 90: innere Längsnuten am zylindrischen Ende vom zweiten Bauteil 72
- 92: Ringnut
- 94: Zylinderbereich am unteren Ende des zweiten Bauteils 72
- 96: oberes Ende vom zweiten Bauteil 72
- 98: Werkzeugaufnahme
- 100: Innenaufnahme
- 102: Werkzeugaufnahme am ersten Bauteil 62
- 104: Flansch vom ersten Bauteil 62
- 106: Flansch von der Kontermutter 74
- 108: Fahne von Flansch des ersten Bauteils 62
- 110: Seite von Fahne 108
- 112: separate Scheibe
- 114: Fahne von der Scheibe 112
- 116: Seite der separaten Scheibe 112
- 118: Klemmaufnahme

## Patentansprüche

1. Montageeinrichtung (10), die eine einstellbare und feststellbare winkelmäßige Anpassung eines Gegenstandes (12) an einem Träger (14) zulässt, wobei mindestens ein geteiltes Montageelement (30) vorgesehen ist, dessen Teile (32) jeweils in einem Bereich einen Abschnitt (34) aufweisen, der eine Befestigung an dem Gegenstand (12) oder an einer am Gegenstand (12) angebrachten Halterung (20) ermöglicht, und die an ihrem dem jeweiligen Abschnitt (34) abgewandten, einander zugewandten Enden (36) gemeinsam einen Klemmbereich (38) bilden, der eine Befestigung an dem Träger (14) ermöglicht, **dadurch gekennzeichnet, dass** die Enden gegeneinander verschiebbar sind.

2. Montageeinrichtung (10), die eine einstellbare und feststellbare winkelmäßige Anpassung eines Gegenstandes (12) an einem Träger (14) zulässt, wobei mindestens ein mehrlagiges Montageelement (30) vorgesehen ist, dessen Teile (32) jeweils in einem Bereich einen Abschnitt (34) aufweisen, der eine Befestigung an dem Gegenstand (12) oder an einer am Gegenstand (12) angebrachten Halterung (20) ermöglicht, und die an ihrem dem jeweiligen Abschnitt (34) abgewandten freien Ende (36) gemeinsam einen Klemmbereich (38) bilden, der eine Befestigung an dem Träger (14) ermöglicht, **dadurch gekennzeichnet, dass** die freien Enden der Teile (32) vor ihrer Klemmung zumindest geringfügig gegeneinander verschiebbar sind.

3. Montageeinrichtung (10) nach Anspruch 1,
**dadurch gekennzeichnet, dass** das Montageelement (30) zweigeteilt ist, d.h. zweiarmig ausgebildet ist.

4. Montageeinrichtung (10) nach Anspruch 1,
**dadurch gekennzeichnet, dass** das Montageelement (30) drei- oder viergeteilt ist, d.h. drei- oder vierarmig ausgebildet ist.

5. Montageeinrichtung (10) nach Anspruch 1 oder 2,
**dadurch gekennzeichnet, dass** mehrere geteilte gleichartig ausgebildete Montageelemente (30) vorgesehen sind, die ausgerichtet übereinander gelegt sind und ein Montagepaket (40) bilden.

6. Montageeinrichtung (10) nach einem der vorhergehenden Ansprüche, **dadurch gekennzeichnet, dass** die Teile (32) des oder jedes Montageelements (30) gleich ausgebildet sind.

7. Montageeinrichtung (10) nach einem der vorhergehenden Ansprüche, **dadurch gekennzeichnet, dass** die Teile (32) des oder jedes Montageelements (30) als Blechstanzteile oder als Kunststoffteil ggf. mit Faserverstärkung ausgebildet sind

8. Montageeinrichtung (10) nach einem der vorhergehenden Ansprüche, **dadurch gekennzeichnet, dass** die Abschnitte (34) des oder jedes Montageelements durch Ausschnitte (42) gebildet sind, die beispielsweise als Befestigungslöcher ausgebildet sind.

9. Montageeinrichtung (10) nach einem der vorhergehenden Ansprüche, **dadurch gekennzeichnet, dass** die an ihrem dem jeweiligen Abschnitt (34) abgewandten, einander zugewandten und gegeneinander verschiebbaren Enden (36) des oder jedes Montageelements (30), die gemeinsam den Klemmbereich (38) bilden, einen jeweiligen Ausschnitt (42) aufweisen, und diese Ausschnitte gemeinsam eine Öffnung (44) zur Aufnahme eines Befestigungselements (22) einer Klemmeinrichtung (28) bilden.

10. Montageeinrichtung (10) nach Anspruch 6 und Anspruch 9,
**dadurch gekennzeichnet, dass** jedes der Teile (32) eines Montageelements (30) im Bereich des Ausschnitts (42) eine Zunge (46) aufweist, die seitlich an dem Befestigungselement bzw. der Öffnung (44) vorbeigeht und dass bei einer Zweiteilung des Montageelements (30) die identisch ausgebildeten Teile zueinander umgekehrt gelegt werden, so dass deren Zungen (46) das Befestigungselement bzw. die Öffnung (44) auf beiden Seiten einfassen, wobei beim Vorsehen von mehreren Montageelementen (30) diese jeweils um 180 Grad um ihre Längsachse (48) gedreht aufeinander gelegt sind.

11. Montageeinrichtung (10) nach einem der vorhergehenden Ansprüche, dadurch **gekennzeicnet**, dass an ihrem dem jeweiligen Abschnitt (34) abgewandten, einander zugewandten und gegeneinander verschiebbaren Enden (36) des oder jedes Montageelements (30), im umgeklemmten Zustand entweder einen kleinen Abstand voneinander aufweisen, oder aneinanderstoßen oder sich teilweise überlappen.

12. Montageeinrichtung (10) nach einem der vorhergehenden Ansprüche, **dadurch gekennzeichnet, dass** mindestens auf der einen Seite des Montageelements (30) oder des Montagepakets (40) ein Federelement (50) gelegt ist, das die Abschnitte (34) mindestens teilweise abdeckt und dazwischen mindestens einen in der Ebene des Montagelements (30) federnden Bereich (52) aufweist.

13. Montageeinrichtung nach Anspruch 12,
**dadurch gekennzeichnet, dass**
das Federelement (50) einen Bereich (56) aufweist, der den Klemmbereich (38) mindestens teilweise überdeckt.

14. Montageeinrichtung (10) nach Anspruch 12 oder 13,
**dadurch gekennzeichnet, dass** das Federelement (50) zweimal vorgesehen ist und das zweite Federelement (50) auf der anderen Seite des Montageelements (30) oder des Montagepakets (40) angeordnet ist; und/oder
dass der oder jeder Federbereich (52) eine Schlangen- oder Mäanderform aufweist; und/oder
dass das oder jedes Federelement (50) entweder als Blechstanzteil oder als Kunststoffteil ggf. mit Faserverstärkung ausgebildet ist.

15. Montageeinrichtung (10) nacheinem der vorhergehenden Ansprüche 1 bis 7,
**dadurch gekennzeichnet, dass** eine Klemmeinrichtung (38) vorgesehen ist, die am Klemmbereich klemmend wirkt und mittels eines Befestigungselements (22) am Träger (14) höhenverstellbar anbringbar ist.

## Claims

1. An installation device (10) which permits an adjustable and fixable angular adaptation of an article (12) to a carrier (14), wherein at least one divided installation element (30) is provided whose parts (32) each have a section (34) in a region which enables an attachment to the article (12) or to a holder (20) attached to the article (12) and jointly form a clamping region (38), which enables an attachment to the carrier (14), at their ends (36) which are remote from the respective section (34) and which confront one another, **characterized in that** the ends are displaceable relative to one another.

2. An installation device (10) which permits an adjustable and fixable angular adaptation of an article (12) to a carrier (14), wherein at least one multilayered installation element (30) is provided whose parts (32) each have a section (34) in a region which enables an attachment to the article (12) or to a holder (20) attached to the article (12) and jointly form a clamping region, which enables an attachment to the carrier (14), at their free end (36) remote from the respective section (34), **characterized in that** the free ends of the parts (32) are at least slightly displaceable relative to one another before their clamping.

3. An installation device (10) in accordance with claim 1,
**characterized in that** the installation element (30) is divided into two, i.e. has two arms.

4. An installation device (10) in accordance with claim 1,
**characterized in that** the installation element (30) is divided into three or four, i.e. has three or four arms.

5. An installation device (10) in accordance with claim 1 or claim 2, **characterized in that** a plurality of divided installation elements (30) of like design are provided which are placed aligned with one another on top of one another and form an installation pack (40).

6. An installation device (10) in accordance with any one of the preceding claims,
**characterized in that** the parts (32) of the or each installation element (30) are made the same.

7. An installation device (10) in accordance with any one of the preceding claims,
**characterized in that** the parts (32) of the or each installation element (30) are formed as punched sheet metal parts or plastic parts, optionally with fiber reinforcement.

8. An installation device (10) in accordance with any one of the preceding claims,
**characterized in that** the sections (34) of the or each installation element are formed by cutouts (42) which are, for example, realized as attachment holes.

9. An installation device (10) in accordance with any one of the preceding claims,
**characterized in that** the ends (36) of the or each installation element (30) which are remote from the respective section (34), which confront one another, which are displaceable relative to one another and which jointly form the clamping region (38) have a respective cutout (42) and these cutouts jointly form an opening (44) for receiving an attachment element (22) of a clamping device (28).

10. An installation device (10) in accordance with claim 6 and claim 9, **characterized in that** each of the parts (32) of an installation element (30) has a tongue (46) in the region of the cutout (42) which passes laterally past the attachment element or the opening (44); and **in that**, when the installation element (30) is divided into two, the identically formed parts are placed relative to one another in a turned-over manner so that their tongues (46) surround the attachment element or the opening (44) at two sides, with, when a plurality of installation elements (30) are provided, said installation elements (30) respectively being placed on one another rotated through 180 degrees about their longitudinal axis (48).

11. An installation device (10) in accordance with any one of the preceding claims,
**characterized in that** the ends (36) of the or each installation element (30) which are remote from the respective section (34), which confront one another and which are displaceable relative to one another have a small spacing from one another, or abut one another, or partly overlap one another in the unclamped state.

12. An installation device (10) in accordance with any one of the preceding claims,
**characterized in that** a spring element (50) is at least placed on the one side of the installation element (30) or of the installation pack (40), the spring element (50) at least partly covering the sections (34) and having at least one spring region (52) in the plane of the installation element (30).

13. An installation device in accordance with claim 12,
**characterized in that** the spring element (50) has a region (56) which at least partly covers over the clamping region (38).

14. An installation device (10) in accordance with claim 12 or claim 13, **characterized in that** the spring element (50) is provided twice and the second spring element (50) is arranged on the other side of the installation element (30) or of the installation pack (40); and/or
**in that** the or each spring region (52) has a snake-like or meandering shape; and/or
**in that** the or each spring element (50) is formed either as a punched sheet metal part or as a plastic part, optionally with fiber reinforcement.

15. An installation device (10) in accordance with any one of the preceding claims 1 to 7,
**characterized in that** a clamping device (38) is provided which acts in a clamping manner at the clamping region and is vertically adjustably attachable to the carrier (14) by means of an attachment element (22).

## Revendications

1. Dispositif de montage (10) permettant une adaptation angulaire réglable et fixable d'un objet (12) sur un support (14),
dans lequel
il est prévu au moins un élément de montage (30) subdivisé, dont les parties (32) présentent chacune une portion (34) située dans une zone et permettant une fixation à l'objet (12) ou à un élément de maintien (20) attaché à l'objet (12), et qui, à leurs extrémités (36) détournées de la portion respective (34) et tournées l'une vers l'autre, forment ensemble une zone de serrage (38) qui permet une fixation sur le support (14),
**caractérisé en ce que**
les extrémités sont déplaçables l'une par rapport à l'autre.

2. Dispositif de montage (10) permettant une adaptation angulaire réglable et fixable d'un objet (12) sur un support (14),
dans lequel
il est prévu au moins un élément de montage (30) à plusieurs couches, dont les parties (32) présentent chacune une portion (34) située dans une zone et permettant une fixation à l'objet (12) ou à un élément de maintien (20) attaché à l'objet (12), et qui, à leur extrémité libre (36) détournée de la portion respective (34), forment ensemble une zone de serrage (38) qui permet une fixation sur le support (14),
**caractérisé en ce que**
les extrémités libres des parties (32) sont au moins légèrement déplaçables l'une par rapport à l'autre avant leur serrage.

3. Dispositif de montage (10) selon la revendication 1,
**caractérisé en ce que**
l'élément de montage (30) est subdivisé en deux, c'est-à-dire qu'il est réalisé avec deux bras.

4. Dispositif de montage (10) selon la revendication 1,
**caractérisé en ce que**
l'élément de montage (30) est subdivisé en trois ou quatre parties, c'est-à-dire qu'il est réalisé avec trois ou quatre bras.

5. Dispositif de montage (10) selon la revendication 1 ou 2,
**caractérisé en ce que**
il est prévu plusieurs éléments de montage (30) subdivisés réalisés de manière identique, qui sont posés en alignement les uns sur les autres et qui forment un empilement de montage (40).

6. Dispositif de montage (10) selon l'une des revendications précédentes,
**caractérisé en ce que**
les parties (32) du ou de chaque élément de montage (30) sont formées de manière identique.

7. Dispositif de montage (10) selon l'une des revendications précédentes,
**caractérisé en ce que**
les parties (32) du ou de chaque élément de montage (30) sont réalisées sous forme de pièces découpées en tôle ou sous forme de pièce en matière plastique, le cas échéant avec un renforcement en fibres.

8. Dispositif de montage (10) selon l'une des revendications précédentes,
**caractérisé en ce que**
les portions (34) du ou de chaque élément de montage sont formées par des découpes (42) qui sont réalisées par exemple sous forme de trous de fixation.

9. Dispositif de montage (10) selon l'une des revendications précédentes,
**caractérisé en ce que**
les extrémités (36) du ou de chaque élément de montage (30) qui sont détournées de la portion respective (34), tournées l'une vers l'autre et déplaçables l'une par rapport à l'autre et qui forment ensemble la zone de serrage (38) présentent chacune une découpe (42), et ces découpes forment ensemble une ouverture (44) pour recevoir un élément de fixation (22) d'un moyen de serrage (28).

10. Dispositif de montage (10) selon la revendication 6 et la revendication 9,
**caractérisé en ce que**
chacune des parties (32) d'un élément de montage (30) présente, dans la zone de la découpe (42), une languette (46) qui passe latéralement à côté de l'élément de fixation ou de l'ouverture (44), et **en ce que** lorsque l'élément de montage (30) est subdivisé en deux, les parties réalisées de façon identique sont posées tête-bêche l'une par rapport à l'autre, de sorte que leurs languettes (46) entourent de part et d'autre l'élément de fixation ou l'ouverture (44), et
lorsqu'il est prévu plusieurs éléments de montage (30), ceux-ci sont posés les uns sur les autres en étant tournés chacun de 180 degrés autour de leur axe longitudinal (48).

11. Dispositif de montage (10) selon l'une des revendications précédentes,
**caractérisé en ce que**
les extrémités (36) du ou de chaque élément de montage (30), détournées de la portion respective (34), tournées l'une vers l'autre et déplaçables l'une par rapport à l'autre, présentent à l'état non serré soit un faible écartement l'une de l'autre, soit sont contiguës, soit se chevauchent partiellement.

12. Dispositif de montage (10) selon l'une des revendications précédentes,
**caractérisé en ce que**
un élément de ressort (50) est posé au moins sur un côté de l'élément de montage (30) ou de l'empilement de montage (40), élément de ressort qui recouvre au moins partiellement les portions (34) et qui présente entre elles au moins une zone (52) qui est élastique dans le plan de l'élément de montage (30).

13. Dispositif de montage selon la revendication 12,
**caractérisé en ce que**
l'élément de ressort (50) présente une zone (56) qui recouvre au moins partiellement la zone de serrage (38).

14. Dispositif de montage (10) selon la revendication 12 ou 13,
**caractérisé en ce que**
l'élément de ressort (50) est prévu deux fois et le deuxième élément de ressort (50) est disposé de l'autre côté de l'élément de montage (30) ou de l'empilement de montage (40) ;
et/ou **en ce que**
la ou chaque zone élastique (52) présente une forme en serpentin ou en méandres ;
et/ou **en ce que**
le ou chaque élément de ressort (50) est réalisé soit sous forme de pièce découpée en tôle, soit sous forme de pièce en matière plastique, le cas échéant avec un renforcement en fibres.

15. Dispositif de montage (10) selon l'une des revendications précédentes 1 à 7,
**caractérisé en ce que**
il est prévu un moyen de serrage (38) qui agit par serrage au niveau de la zone de serrage et qui peut être attaché au support (14) de manière réglable en hauteur à l'aide d'un élément de fixation (22).
